(19) **Europäisches Patentamt**
**European Patent Office**
**Office européen des brevets**

(11) **EP 1 947 437 A1**

(12) **EUROPEAN PATENT APPLICATION**

(43) Date of publication:
**23.07.2008 Bulletin 2008/30**

(51) Int Cl.:
***G01L 5/26*** (2006.01)

(21) Application number: **07445001.6**

(22) Date of filing: **17.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **ABB RESEARCH LTD.**
**8050 Zürich (CH)**

(72) Inventors:
• **Waqas, Arshad**
**724 76 Västerås (SE)**

• **Bono, Silvia**
**28100 Novara (IT)**
• **Kanerva, Sami**
**00410 Helsinki (FI)**
• **Persson, Holger**
**SE-723 53 Västeras (SE)**

(74) Representative: **Reyier, Ann-Mari**
**ABB AB**
**Legal Affairs & Compliance/Intellectual Property**
**721 78 Västeräs (SE)**

(54) **A method of determining torque**

(57)    A method of determining torque for an electrical motor comprises determining the dynamic torque of the motor as a function of operating parameters of the motor, and determining the dynamic torque for an operating condition for the motor by means of the previously determined function.

Fig. 3

**Description**

FIELD OF INVENTION

The present invention generally relates to a method of determining torque and more particularly to a method of determining dynamic torque and estimating the static torque from the measured dynamic torque, in particular, the breakdown torque in an induction motor.

BACKGROUND

For electrical motors, such as induction motors, each motor type is given a certain breakdown torque value. This torque value represents a maximum torque provided by the motor in question. However, the quotation breakdown torque values conventionally represent static torque, i.e., the torque provided with steady state flux in the motor. Measured breakdown torques at factory test floors through routine run-up tests differ by 20-30% to the quoted values valid for static operation since the run-up tests yield figures for dynamic operation, such as during start-up. Such tests are usually conducted without load and at reduced voltages.

It would be advantageous if onsite breakdown torque could be obtained in an easy and cost-efficient way from routine factory tests.

SUMMARY OF THE INVENTION

An object of the present invention is thus to provide a method of determining without undue burden the expected onsite breakdown torque provided by an electrical motor for dynamic operation and for loaded conditions.

The invention is based on the realization that the torque for dynamic operation and for different loading conditions can be predicted through measurements and calibrated simulations by comparing dynamic torques against the static torque figures.

According to the invention there is provided a method of determining torque for an electrical motor, the method comprising the following steps: a) determining the dynamic torque of the motor as a function of operating parameters of the motor, and b) determining the dynamic torque for an operating condition for the motor by means of the function determined in step a).

By the inventive method, onsite breakdown torque can be obtained in an easy and cost-efficient way from routine factory tests.

In a preferred embodiment, the method involves determining the breakdown torque, whereby the operation of the motor can be further predicted.

Further preferred embodiments are defined by the dependent claims.

BRIEF DESCRIPTION OF DRAWINGS

The invention is now described, by way of example, with reference to the accompanying drawings, in which:

Fig. 1 is an overview of a monitoring arrangement with load possibilities used with the method according to the invention,

Fig. 2 is a diagram showing static and dynamic motor torque as a function of speed,

Fig. 3 is a diagram showing examples of breakdown torque as a function of dynamic effect limits in an induction motor, and

Fig. 4 is a diagram showing estimation of breakdown torque using known correlation with dynamic effect limits.

DETAILED DESCRIPTION OF PREFERRED EMBODIMENTS

In the following a detailed description of preferred embodiments of the present invention will be given. When in this description reference is made to inertia, this inertia is that of the motor and any load connected to the motor, such as a flywheel or another motor.

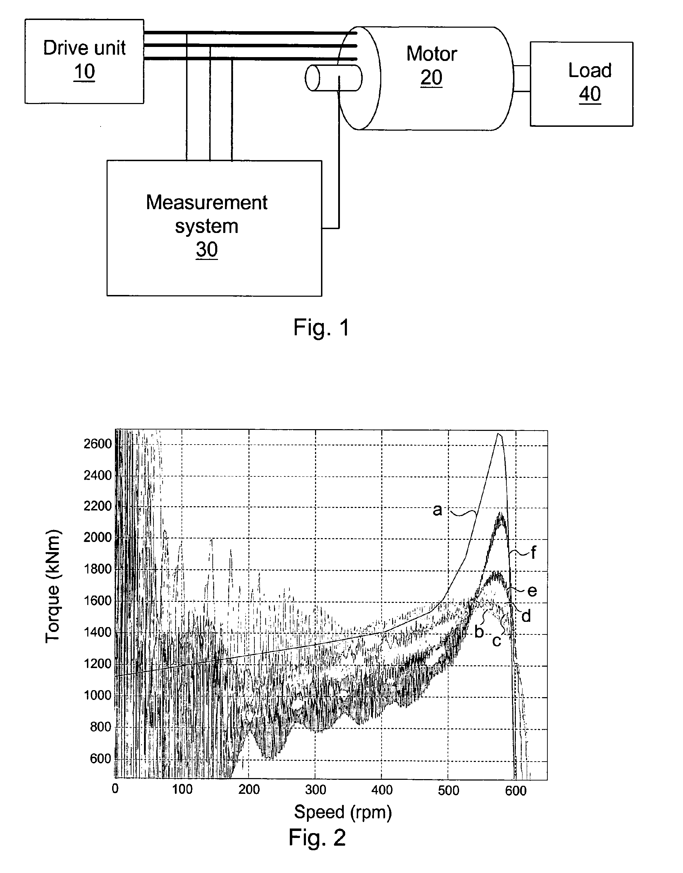

Fig. 1 shows an overview of a test system used with the method according to the invention. A drive unit 10 is electrically connected to an electrical motor, such as an induction motor 20. A measurement system 30, is connected to the motor for measuring different motor parameters, such as motor voltages, motor currents, speed, torque, inertia, temperature, impedances, etc. and estimation of the saturation of the magnetization in the iron. A load 40 in the form of a loading device or a loading machine may be connected during measurement tests.

Fig. 2 shows simulations for breakdown torques for a 6,6 kV induction motor. Curve "a" represents the static torque values whereas curve "b" represents a full-voltage routine factory run-up test that gives dynamic torque. It can be seen that the difference between these two curves is more than 40%. This difference is decreased by performing reduced voltage tests so as to slow down the start and then scaling the results to full voltage. Curves "c"-"f" represent 5.5 kV, 4.4, kV, 3.3 kV, and 1.25 kV feeding, respectively, with saturation accounted for as well. As can be seen even a very low voltage test, curve "f" representing the 0.2 per unit voltage case, cannot remove the dynamic effects altogether. Further, in reality such a test will take a long time, such as 250 seconds, and will be impossible to conduct.

The dynamic torque is thus dependent on a number of motor parameters, of which can be mentioned motor voltages, inertia, temperature, impedances, the estimated iron saturation from measured motor currents or inductances, etc. By investigating the relationship between these parameters and the dynamic breakdown torque, dynamic effects can be compensated for when determining the torque in general and the breakdown torque in particular.

Thus, in a first step of the inventive method, these relationships are determined for some or all of the above mentioned parameters. In a preferred embodiment, the effects of voltage and inertia are investigated.

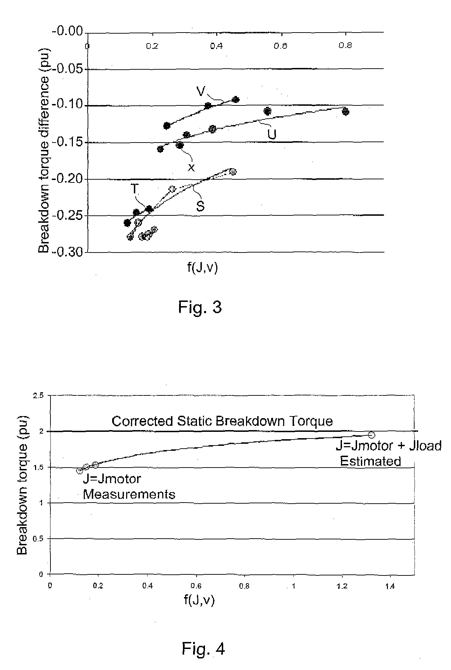

In Fig. 3, examples of the difference between dynamic breakdown torque and static breakdown torque are shown using the parameters voltage and inertia, and more specifically the dynamic effect limit f(J,u), wherein J is the inertia of the motor rotor and u is the voltage applied to the motor. In one embodiment, the parameters inertia and voltage are used as follows

$$\frac{J}{u^k}$$

wherein k is a real number different from zero. In a preferred embodiment, k=2.

For each motor, a number of measurements are performed and a compensation curve adapted to the measurement points is derived by means of some suitable curve-fitting method or through physically explained dependencies. Hence, compensation curves for different motors are derived through measurements and calibrated simulations by comparing dynamic effects against the static torque figures.

In one embodiment, the dynamic torque compensation curve is derived directly from two or more tests, i.e., measurement points. These tests can be performed with different voltages and/or inertias for example, thereby creating different measurement points. It is then preferred that the different test parameters are appropriately spaced and preferably at least 0.1 per unit apart to yield the particular compensation curve for the individual machine in question.

However, since each test is costly in terms of time and possibly equipment, in an alternative embodiment, the compensation curve is derived from only one test, i.e., only one measurement point. This measurement point is then used together with earlier derived curves to find the compensation curve applicable for the motor for which the single measurement point was obtained.

Continuing the example above, the light gray test point labeled "x" in Fig. 3 is obtained for a motor. In this diagram of earlier derived compensation curves, it is found that this test point is closest to the compensation curve labeled "U". Thus, using this just one test or measurement point, it is assumed that the compensation curve "U" is applicable to the motor in question.

Thus, a suggested compensating curve derivation method using just one test point and earlier derived compensation curves will now be described in detail. First, the calculated static breakdown value is calibrated through some measured starting currents, starting torques etc. determining the saturation characteristics of the motor.

$$T_{static\_corrected} = T_{static\_calculated} \frac{I_{start\_measured}}{I_{start\_calculated}}$$

wherein $I_{start\_calculated}$ is the calculated start current, $I_{start\_measured}$ is the measured start current, $T_{start\_calculated}$ is the calculated static torque, and $T_{static\_corrected}$ is the corrected static torque. The true static breakdown torque potential of the motor is thus identified.

The static breakdown torque can alternatively be determined by means of theoretical calculations or be measured directly on a test motor.

A run-up test is then performed at some voltage, such as at the lowest possible voltage, giving the difference between static and dynamic torques as follows. The measured torque may be scaled to the full voltage, for example using the methods suggested by the standards IEEE 112 and IEEE 115. This could include the square dependence on the voltage plus another coefficient for the saturation, based on the starting current measurements.

$$Difference = (T_{measured} - T_{static\_corrected})/T_{static\_corrected}$$

The test point is then plotted in the earlier derived curve diagram and the curve that is closest to the measured point is selected, for example by means of a curve-fit equation.

Finally, the dynamic torque at the lowest test voltage and when the load inertia is present are estimated.

In yet an alternative embodiment, no tests at all are used when determining compensation curve for a motor. Instead, the compensation curve is determined from earlier derived curves and the design of the motor, i.e., parametric dependencies, such as resistance, inductances, estimated saturation etc, which are obtained by means of measuring, for example.

By minimizing or even eliminating the need for test runs before delivery of a motor, manufacturing and testing costs are minimized.

By providing a dynamic torque compensation curve with each motor, the understanding of the dynamic behavior of the motor can be improved. It has been found that this approach allows dynamic effect compensation to be within a few percent of the static torque value for any test room voltage, motor inertia, and temperature.

In a second step of the inventive method, a compensation curve derived in the first step is used to predict or estimate the breakdown torque of the same or a corresponding electrical motor when this motor has been set up on site. An example of this is shown in the diagram of Fig. 4, wherein a compensation curve for an induction motor is shown. This compensation curve has been determined as explained above with the use of three measurement points, shown to the left in the diagram. These measurements have been performed using different voltages and the motor's own inertia, i.e., the inertia $J = J_{motor}$. The inertia $J_{load}$ of the load that will be connected to the motor on site is known. Thus, it will be known that the on site inertia will be $J = J_{motor} + J_{load}$. This value is found on the x-axis of the diagram and the breakdown torque value is found by cross-indexing. In this example, the breakdown torque value will be approximately 1.9 per unit.

Preferred embodiments of a method according to the invention have been described. A person skilled in the art realizes that these could be varied within the scope of the appended claims. Thus, although the breakdown torque has been discussed in detail, also determination of other torque aspects, such as the pull-in torque, i.e., the largest steady torque with which a motor will attain normal speed after accelerating from a standstill, and the rated torque, is of interest.

The parameters voltage and inertia have been described with the inventive method, but similar correlations with other parameters, such as temperature, saturation, current, flux, or speed and their derivatives and combinations thereof could also be used.

## Claims

1. A method of determining torque for an electrical motor, the method comprising the following steps:

   a) determining the dynamic torque of the motor as a function of operating parameters of the motor, and
   b) determining the dynamic torque for an operating condition for the motor by means of the function determined in step a).

2. The method according to claim 1, comprising the additional step of determining the static torque based on the dynamic torque determined in step b).

3. The method according to claim 1 or 2, wherein step a) comprises:

   - performing a number of measurements using at least one test parameter, thereby obtaining a plurality of measurement points, and
   - deriving a compensation curve, which is adapted to the measurement points.

4. The method according to claim 3, wherein the compensation curve is derived by means of a curve-fitting method.

5. The method according to claim 3, wherein the compensation curve is derived through physically explained dependencies.

6. The method according to any of claims 3-5, wherein the at least one test parameter comprises motor voltage, inertia, temperature, saturation, current, flux, or speed and their derivatives and combinations thereof.

7. The method according to any of claims 3-6, wherein the at least one test parameter comprises motor voltage and inertia.

8. The method according to claim 7, wherein step a) involves using the operating parameter function

$$\frac{J}{u^k}$$

wherein J is the inertia of the motor rotor, u is the voltage applied to the motor, and k is a real number different from zero.

9. The method according to claim 8, wherein k=2.

10. The method according to any of claims 2-9, wherein the test parameters during the measurements are appropriately spaced, and preferably at least 0.1 per unit apart.

11. The method according to any of claims 1-10, wherein the step b) comprises making a single test and using an earlier derived compensation curve to determine the dynamic torque for an operating condition for the motor.

12. The method according to any of claims 1-10, wherein step b) comprises obtaining parametric dependencies of the motor, such as resistance, inductance, estimated iron saturation, and using an earlier derived compensation curve together with the parametric dependencies to determine the dynamic torque for an operating condition for the motor.

13. The method according to any of claims 1-12, wherein the torque determined by means of the method is breakdown torque.

14. The method according to any of claims 1-13, wherein the torque determined by means of the method is any point on the starting torque curve, and preferably the pull-in torque.

15. The method according to any of claims 1-14, wherein the electrical motor is an induction motor.

Fig. 1

Fig. 2

Fig. 3

Fig. 4

**European Patent Office**

**EUROPEAN SEARCH REPORT**

Application Number

EP 07 44 5001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 103 13 471 A1 (DAIMLER CHRYSLER AG [DE]) 7 October 2004 (2004-10-07) * abstract * * paragraphs [0006], [0021], [0022] * ----- | 1-15 | INV. G01L5/26 |
| X | EP 0 169 528 A (FMC CORP [US]) 29 January 1986 (1986-01-29) * abstract * * claims 5,8-10 * ----- | 1-15 | |
| X | DE 198 47 205 A1 (ZF BATAVIA LLC [US] ZAHNRADFABRIK FRIEDRICHSHAFEN [DE]) 20 April 2000 (2000-04-20) * abstract * * claims 1,5,11 * ----- | 1,3-6, 11,12 | |

| | | | TECHNICAL FIELDS SEARCHED (IPC) |
|---|---|---|---|
| | | | G01L G01M |

The present search report has been drawn up for all claims

| Place of search | Date of completion of the search | Examiner |
|---|---|---|
| The Hague | 30 November 2007 | Cilissen, Marcel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 44 5001

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2007

| Patent document cited in search report | | Publication date | Patent family member(s) | | Publication date |
|---|---|---|---|---|---|
| DE 10313471 | A1 | 07-10-2004 | WO 2004085982 | A1 | 07-10-2004 |
| EP 0169528 | A | 29-01-1986 | CA 1227283 | A1 | 22-09-1987 |
| | | | DE 3573657 | D1 | 16-11-1989 |
| | | | JP 61031942 | A | 14-02-1986 |
| | | | US 4581923 | A | 15-04-1986 |
| DE 19847205 | A1 | 20-04-2000 | US 6219607 | B1 | 17-04-2001 |

EPO FORM P0459

For more details about this annex : see Official Journal of the European Patent Office, No. 12/82